# EUROPÄISCHE PATENTSCHRIFT

(11) **EP 0 763 406 B1**
(45) Veröffentlichungstag und Bekanntmachung des Hinweises auf die Patenterteilung: **23.02.2000**
(21) Anmeldenummer: 95114588.7
(22) Anmeldetag: 15.09.1995
(51) Int. Cl.: B25J 9/16, G05B 19/401

(54) **Verfahren zum Bestimmen der Lage eines Körpers im Raum**
Method of determination of the spatial position of an object
Méthode de détermination de la position d'un objet dans l'espace

(43) Veröffentlichungstag der Anmeldung: 19.03.1997
(73) Patentinhaber: Ersü, Enis, 64297 Darmstadt (DE)
(72) Erfinder: Ersü, Enis, Dipl.-Ing., D-64297 Darmstadt (DE); Wienand, Stephan, Dipl.-Ing., D-64673 Zwingenberg (DE)
(74) Vertreter: Dallhammer, Herbert, Dipl.-Ing.

(56) Entgegenhaltungen:
- EP-A- 0 489 919
- WO-A-93/05479
- WO-A-94/29774
- FR-A- 2 706 999
- US-A- 4 639 878
- US-A- 4 796 200

## Beschreibung

Die Erfindung betrifft ein Verfahren zum Bestimmen der Lage eines Körpers im Raum um mit mehreren mit diesem zusammenwirkenden räumlich getrennten elektronischen Kameras mit Bildverarbeitung um Manipulationen an diesem durchzuführen.

Derartige Verfahren zur Bestimmung der Lage eines Körpers in einem Raum sind insbesondere bei der Herstellung von Kraftfahrzeugen erforderlich, wenn es bei der Serienherstellung und Serienmanipulation darum geht, Körper gleichen Typs mit Zusatzteilen wie Türen, Kotflügeln, Radaufhängungen oder Kofferraumdeckeln zu versehen. Auch ist es einsetzbar, um erforderliche Manipulationen beim Schweißen, Lackieren oder Abdichten von Nähten raschestmöglich durchzuführen.

Jedoch nicht nur auf dem Gebiet der Fahrzeugtechnik, sondern auf allen anderen Gebieten, bei welchen ein Bauteil aus mehreren Bauteilen zusammengesetzt werden soll, ist zur raschen Herstellung eines derartigen Elements, insbesondere im Hinblick auf die Genauigkeit und die Schnelligkeit eine Lagebestimmung unumgänglich.

Um derartige Vermessungen durchzuführen, fehlt es nicht an Versuchen, dies zu bewerkstelligen. So ist es beispielsweise bekannt geworden, Kanten einer Fahrzeugkarosserie mit Hilfe einer Laserabtastung festzustellen, diese Werte zu speichern und entsprechend diesen Werten nachfolgende Bauteile auszurichten, um dann anschließend daran, beispielsweise mit Hilfe von Robotern, Türen anzuschweißen oder auch das Befestigen von Kofferraumdeckeln oder Motorhauben zu bewerkstelligen.

Es ist jedoch bekannt, daß durch Laserstahl eine Gesundheitsschädigung nicht auszuschließen ist. Für die Verbindung eines Bauteils mit einem Grundkörper, beispielsweise einer Autotür mit einem Grundrahmen, ist es erforderlich, Lagetoleranzen auszugleichen, weil sonst ein Verscheißen nicht sicher durchgeführt werden kann, wenn nicht die Stellen für die Scharniere der Tür am Rahmen genau erreicht werden oder wenn zwischen diesen Stellen und den Türscharnieren zu Beginn des Schweißvorgangs ein zu großer Abstand besteht. Die Folge derartiger Mißeinstellungen sind dann zwangsläufig Ausschußherstellungen, die erst mühselig entweder nachgearbeitet oder direkt verschrottet werden müssen.

Als Hilfsmittel verwendet man deshalb auch mechanische Arretierungen, welche auf den Förderbändern die zusammenzubauenden Bauteile, d. h. den Grundkörper sicher führen, damit von dieser Seite aus bereits eine grobe Voreinstellung gegeben ist. Derartige Hilfseinrichtungen sind jedoch nicht nur einem Verschleiß und einer Verschmutzung ausgesetzt, sondern es tritt wie oben ausgeführt auch die Toleranz bei der Herstellung des Grundkörpers sehr stark in Erscheinung. Dies und die zunehmende Forderung nach flexibler Fertigung bei einem Produktmix führen dazu, daß solche Einrichtungen praktisch nicht mehr einsetzbar sind. Unter Produktmix versteht man im vorliegenden Fall eine nicht sortenreine Fertigung auf einer Fertigungslinie.

Durch das Patent mit der Nr. US-A-4 639 878 ist eine Methode und eine Einrichtung zur automatischen Festlegung der Position eines dreidimensionalen Körpers in einer Arbeitsstation bekannt geworden, bei der drei Kameras verwendet werden, wobei jede Kamera verschiedene Werte eines Kalibrierkörpers aufnimmt und wobei zusätzlich ein dreidimensionaler Körper zu den Koordinaten der auf dem Körper angeordneten Koordinaten, welche ihren Nullpunkt in auf dem Körper vorgegebenen Öffnungen besitzenden Übereinstimmung gebracht wird.

Aus dem US Patent ist ein Verfahren zum Bestimmen der Lage eines Körpers im Raum um Manipulationen an diesem durchzuführen mit mehreren mit diesem zusammenwirkenden räumlich getrennten elektronischen Kameras mit Bildverarbeitung bekannt, wobei der Körper in den Raum zwischen den elektronischen Kameras verbracht wird, je ein charakteristischer Punkt auf dem in den Raum verbrachten Körper in je einer diesem zugeordneten elektronischen Kamera abgebildet wird, daß dessen Lage in Bild mit seiner konstruktiven vorgegebenen Position des charakteristischen Punktes auf den in den Raum verbrachten Körper zusammen mit gespeicherten Werten verarbeitet wird und alle verarbeiteten Werte die Lage des in dem Raum verbrachten Körpers in den sechs räumlichen Freiheitsgraden charakterisieren.

Ausgehend hiervon liegt der vorliegenden Erfindung die Aufgabe zugrunde, ein zu manipulierendes Element in Bezug zum Manipulator direkt zu bringen. Diese Aufgabe wird erfindungsgemäß dadurch gelöst,
a) daß jede von mindestens drei räumlich getrennten elektronischen Kameras mit Bildverarbeitung bei deren Einmessen eine ihr zugeordnete Kalibriertafel mit Punktmuster aufnimmt, deren Bilder, sowie das Punktmuster zur Bestimmung der Lage der einzelnen Kamera im Raum verarbeitet und deren Lage speichert,
b) daß eine Vermessung der Kalibriertafeln zueinander getrennt hiervon erfolgt, daß diese Werte ebenfalls gespeichert werden,
c) daß anschließend der Körper in den Raum zwischen den elektronischen Kameras verbracht wird,
d) daß je ein charakteristischer Punkt auf den in den Raum verbrachten Körper in je einer diesem zugeordneten elektronischen Kamera abgebildet wird, daß dessen Lage im Bild mit seiner konstruktiven vorgegebenen Position des charakteristischen Punkts auf den in den Raum verbrachten Körper zusammen mit den gespeicherten Werten verarbeitet wird und
e) daß alle derart verarbeiteten Werte die Lage des in den Raum verbrachten Körpers in den sechs räumlichen Freiheitsgraden charakterisieren.

Es wird als unter die Erfindung fallend angesehen, wenn die unter Kombinationen a und b gegeneinander ausgetauscht werden.

Hierdurch wird erreicht, daß unabhängig von der Genauigkeit der Herstellung des Grundkörpers jeweils an der richtigen Stelle, bezogen auf den Manipulator, Elemente an der richtigen Stelle am Grundkörper angebracht werden können, da die Ausrichtung des Körpers nunmehr zwangsläufig durch eine Koordinatentransformation zwischen dem die räumliche Lage des Körpers darstellenden Koordinatensystem und dem Koordinatensystem des Roboters oder Manipulators, der zwangsläufig zu den Fahrzeugkoordinaten ausgerichtet sein muß, um ein sicheres und ausschußfreies Bearbeiten des Körpers beispielsweise des Grundgestells einer Karosserie zu bewirken. Auch ist es hierdurch möglich, Lackierungen oder Abdichtungen oder Ummantellungen zielgenau am zu fertigenden Bauteil anzubringen.

Darüberhinaus ist auch eine mechanische Bearbeitung eines so in den Raum verbrachten Körpers möglich, wenn zusätzlich erfindungsgemäß die Führung eines Gegenhalters das Bauteil bzw. die Karosse abstützt, so daß mittels spanabhebender Bearbeitung beispielsweise eine Bearbeitung durchgeführt werden kann.

Eine Ausgestaltung des erfinderischen Gegenstandes besteht darin, daß die Position eines Nullkörpers des selben Typs bestimmt wird und daß die Messung aller folgenden Körper auf diesen bezogen werden. Damit wird erreicht, daß eventuelle Fehler bei der Einmessung sowie der Vermessung zufolge ungenauer Herstellung der Grundkarosse beispielsweise minimiert werden, da diese Fehler sich beim Bezug der weiteren Karossen auf die Nullkarosse als Fehler höherer Ordnung wesentlich verringern.

Im Nachfolgenden wird an einem Ausführungsbeispiel die erfinderische Verfahrensweise näher erläutert.

Es zeigen in schematischer Darstellung:
- Figur 1: einen Einmeßvorgang für die Position einer Kamera bezüglich des Raums
- Figur 2: eine Bestimmung der räumlichen Lage eines Körpers an welchem Manipulationen durchgeführt werden
- Figur 3: Einfluß einer Positionierung eines Nullkörpers

In der Beschreibung werden in den einzelnen Figuren gleiche Bauteile mit denselben Bezugziffern bezeichnet.

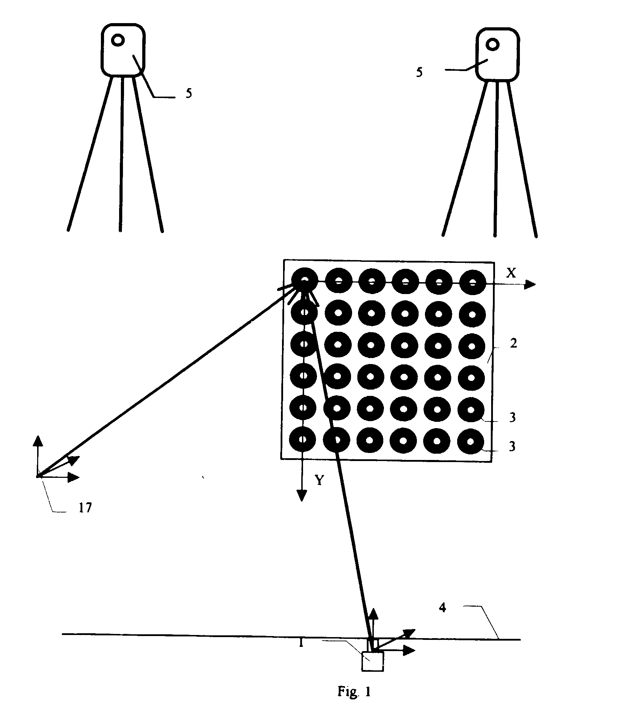

Gemäß Figur 1 wird eine Kamera 1, bei der es sich um eine bekannte CCD-Kamera mit bekannter Bildverarbeitung handelt, optisch mit einer Kalibriertafel 2 in Verbindung gebracht. Auf der Kalibriertafel 2 sind Markierungen 3 angeordnet, deren gegenseitiger Abstand bekannt ist. Die Kamera 1 wird an den Rand des Raumes verbracht, beispielsweise bei einer Lackierkabine zum Lackieren von Fahrzeugkarossen hinter einer Wand der Lackierkabine, um die Kamera vor Beschädigung und Verschmutzen zu schützen, dergestalt, daß lediglich eine kleine Öffnung in der Wand verbleibt, durch welche die Kamera 1 eine optische Verbindung mit der ihr zugeordneten Kalibriertafel 2 aufnehmen kann.

Voraussetzung für eine richtige Einmessung ist lediglich, daß die Kamera 1 nicht senkrecht zur Kalibriertafel 2 steht.

Die nunmehr über die Kamera aufgenommenen Informationen dienen dazu, die räumliche Lage, bzw. das Koordinatensystem der Kamera 1, festzulegen. In den anderen Wänden 4 der Lackierkabine sind mindestens noch zwei weitere Kameras 1 in der selben Weise angeordnet und arbeiten ebenfalls mit weiteren Kalibriertafeln zusammen. Der Vorgang des Einmessens wurde der Einfachheit halber nur mit einer Kamera erläutert. Es ist jedoch verständlich, daß jede der beiden anderen Kameras in der selben Weise eingemessen werden kann.

Nach Einmessen der Kameras in der oben beschriebenen Weise wird in einem getrennten Vorgang wie ebenfalls auf Figur 1 dargestellt, nunmehr die Lage der Kalibriertafeln 2 bestimmt. Im Ausführungsbeispiel handelt es sich um drei Kalibriertafeln, die durch ein anderes Meßmittel, beispielsweise Theodoliten 5, vermessen und deren Ergebnis gespeichtert wird. Das in der Figur 1 dargestellte Koordinatensystem 17 stellt das Bezugskoordinatensystem für die gesamte Messung dar.

Aufgrund dieser Einmeßwerte, bestehend aus den in der Kamera mittels Bildverarbeitung gemessenen und gespeicherten Werten und den durch die theodolitische Vermessung der drei Kalibriertafeln erhaltenen Werte, ist die Position der Kamera bestimmt.

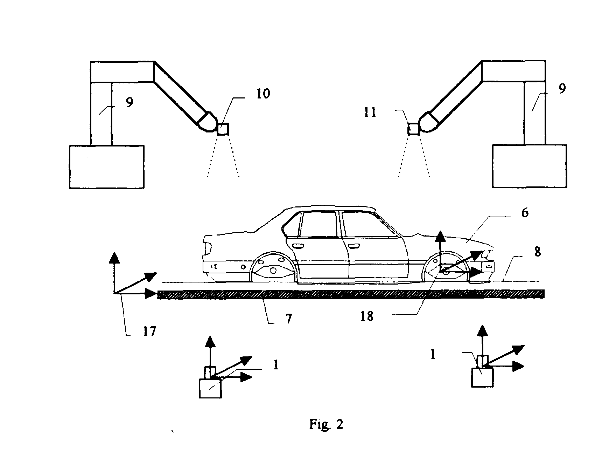

Wird nun, wie in Figur 2 dargestellt, ein Körper 6 in den Raum verbracht, beispielsweise über am Boden 7 verlegte Schienen 8, so kann, nachdem die Kameras 1 auf den Raum eingemessen wurden, nun ein beliebieger Punkt bzw. beliebige Punkte am Körper 6, bei dem es sich im Ausführungsbeispiel um eine Karosserie handelt, ausgewählt werden, an welchen Manipulationen am Körper 6 durchgeführt werden müssen, beispielsweise das Einsetzen von Türen oder das Anbringen von Deckeln oder das Einstellen von Spritzpistolen bei einer Lackieranlage zu der jeweiligen Oberfläche des Körpers mit Hilfe von Robotern 9. Mittels der Kameras wird die Postition je eines Merkmals, dessen Position in dem dem Objekt zugeordneten Koordinatensystem 18 gespeichert ist, im aufgenommenen Kamerabild mittels Bildverarbeitung erkannt und mit dem bei der Einmessung gespeicherten Werten verarbeitet. Hieraus ist der Bezug des Koordinatensystems 18 zum Koordinatensystem 17 bestimmt. So tragen im Ausführungsbeispiel die beiden Roboter 9 Farbdüsen 10 und 11, welche eine fehlerfreie Lackierung des Fahrzeugs ermöglichen. Anstelle dieser Farbdüsen 10/11 können auch andere Hilfswerkzeuge treten, beispielsweise Versiegelungseinrichtungen, welche Schweißnähte versiegeln oder auch Schraubeinrichtungen, welche Blechteile mit oder ohne entsprechende Gegenhalterungen an den Karossen anbringen.

Hierzu ist, wie bereits in der Einleitung gesagt, erfindungsgemäß gleichartig eingestellt ein Gegenhalter verwendbar, um beispielsweise die Bohrkräfte, welche beim Bohrvorgang auftreten, aufnehmen zu können, ohne daß die Karosserie während der Manipulation in eine andere Lage verschoben wird.

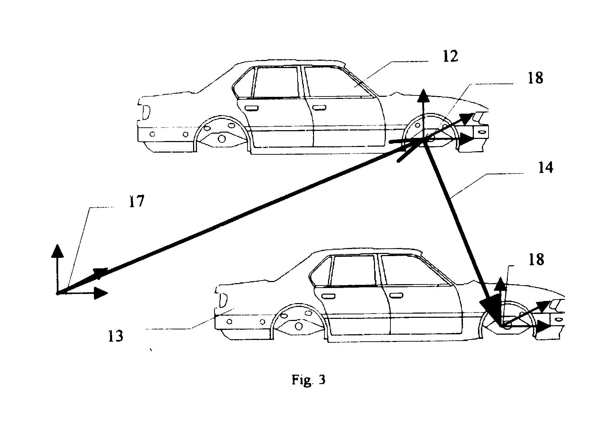

In Figur 3 ist ein Ausführungsbeispiel dargestellt, mit welchem der Einfluß einer Positionierung eines Nullkörpers auf die hierdurch zu steigernde Bearbeitungsgenauigkeit erläutert wird. Ein Nullkörper 12 wird, wie zu Figur 1 und Figur 2 insbesondere beschrieben, vermessen. Hierbei handelt es sich bei dem Nullkörper um einen Körper des selben Typs der nachfolgend zu bearbeitenden Körper. Durch diese Vorgehensweise lassen sich Fehler, die beispielsweise durch Ungenauigkeiten in der Herstellung oder des Einmessens, oder Meßfehler, die bei der Vermessung des Nullkörpers aufgetreten sind, minimieren. Es bleiben nur noch Fehler höherer Ordnung übrig. Bei nachfolgenden Messungen wird aus einem bei der Nullmessung bestimmten Lagewert zufolge Verschiebung des nächsten zu manipulierenden Körpers 13 ein Verschiebevektor festgestellt, welcher dann bei der Einstellung des in Figur 9 dargestellten Roboters durch Vergleich zwischen Istposition des nächsten zu manipulierenden Körpers 13 mit der Sollposition bzw. Nullposition des Nullkörpers 12 verglichen wird und hiermit berücksichtigbar bleibt.

## Patentansprüche

1. Verfahren zum Bestimmen der Lage eines Körpers (6) im Raum um Manipulationen an diesem durchzuführen mit mehreren mit diesem zusammenwirkenden räumlich getrennten elektronischen, Kameras (1) mit Bildverarbeitung wobei,
a) jede von mindestens drei räumlich getrennten elektronischen Kameras (1) mit Bildverarbeitung bei deren Einmessen eine ihr zugeordnete Kalibriertafel (2) mit Punktmuster aufnimmt, deren Bilder sowie das Punktmuster zur Bestimmung der Lage der einzelnen Kamera (1) im Raum verarbeitet und deren Lage speichert,
b) eine Vermessung (5) der Kalibriertafeln (2) zueinander getrennt hiervon erfolgt, daß diese Werte ebenfalls gespeichert werden,
c) anschließend der Körper (6) in den Raum zwischen den elektronischen Kameras (1) verbracht wird,
d) je ein charakteristischer Punkt auf dem in den Raum verbrachten Körper (6) in je einer diesem zugeordneten elektronischen Kamera (1) abgebildet wird, daß dessen Lage in Bild mit seiner konstruktiven vorgegebenen Position des charakteristischen Punktes auf den in den Raum verbrachten Körper (6) zusammen mit den gespeicherten Werten verarbeitet wird und
e) alle derart verarbeiteten Werte die Lage des in dem Raum verbrachten Körpers (6) in den sechs räumlichen Freiheitsgraden charakterisieren.

2. Verfahren nach Anspruch 1 dadurch gekennzeichnet, daß die Position eines Nullkörpers desselben Typs bestimmt wird und daß die Messung aller folgenden Körper (6) auf diesen bezogen wird.

## Claims

1. Procedure to determine the position of a body (6) in space in order to carry out manipulations thereof, with several spatially separated electronic cameras (1), interacting with body, with image processing, whereby
a) each of at least three spatially separated electronic cameras (1) with image processing, where for calibration an associated calibration table (2) with dot patterns is taken, the image of which as well as the dot pattern are processed to determine the position of the indiviual cameras (1) and their positions are stored.
b) measurement (5) of the calibration tables 2) against each other is done independent thereof, so that these values are also stored.
c) subsequently the body (6) is positioned in the space between the electronic cameras (1)
d) a characteristic point each on the body (6) positioned in the space, is imaged in one electronic camera (1) associated with it, so that the position thereof in the image with its constructively predetermined position of the characteristic point on the body (6) positioned in the space, is processed together with the stored values, and
e) all thus processed values characterize the position of the body (6) positioned in space, in the six spatial degrees of freedom.

2. Procedure according to claim 1, characterized such, that the position of a nullbody of same type is determined and that measurement off all subsequent bodys (6) takes reference to this.

## Revendications

1. Procédé pour déterminer le positionnement d'un corps (6) dans l'espace afin d'effectuer des manipulation sur cclui-ci au moyen de plusieurs caméras électroniques (1) séparées dans l'espace et agissant sur ce corps au moyen de traitement d'images. Ce procédé se caractérise comme suit:
a) Lors de l'étalonnage, chacune des au minimum trois caméras électroniques (1) á traitment d'images séparées dans l'espace prend sur plan un tableau d'étalonnage (2) á réscau de points lui étant attribué et prenant les mesures des images et du réseau de points permettant la détermination et l'enregistement du positionnement de chaque caméra dans l'espace.
b) Idépendamment, un mesurage (5) des tableaux d'étalonnage (2) entre eux sera effectué at ces données également enregistrées
c) Le corps (6) sera ensuite placé dans l'espace se trouvant entre les caméras électroniques.
d) Par chacune des caméras électroniques (1), un point précis sur le corps (6) placé dans l'espace, attribué á l'une de ces caméras, sera photographié, Son positionnement dans l'image avec sa position contructive prédéfinie du point caractéristique par rapport au corps (6) placé dans l'espace sera traité en combinaison avec les données enregistrées.
e) Toutes les valeurs traitées de cette maniére caractérisent le positionnement du corps (6) placé dans l'espace dans les six degrés de liberté spaciaux.

2. Conformément á la spécification 1, ce peocédé se caractérise par la détermintion de la position d'und corps zéro du méme type et par le fait que la mesure de tous les corps suivants (6) se référe á ce dernier.
